# EUROPEAN PATENT SPECIFICATION

(11) **EP 4 604 279 B1**
(45) Date of publication and mention of the grant of the patent: **11.11.2026**
(21) Application number: 25157783.9
(22) Date of filing: 13.02.2025
(51) Int. Cl.: H01M 50/103, H01M 50/119, H01M 50/15

(54) **BATTERY CELL INCLUDING CASE, BATTERY DEVICE COMPRISING THE SAME, AND CASE MANUFACTURING PROCESS**
BATTERIEZELLE MIT GEHÄUSE, BATTERIEVORRICHTUNG DAMIT UND GEHÄUSEHERSTELLUNGSVERFAHREN
ÉLÉMENT DE BATTERIE COMPRENANT UN BOÎTIER, DISPOSITIF DE BATTERIE COMPRENANT CELUI-CI, ET PROCÉDÉ DE FABRICATION DE BOÎTIER

(30) Priority: 14.02.2024 KR 20240021155
(43) Date of publication of application: 20.08.2025
(60) Divisional application: 26209190.3
(73) Proprietor: SK On Co., Ltd., Seoul 03161 (KR)
(72) Inventor: KWAK, Seung Ho, 34124 Daejeon (KR)
(74) Representative: Stolmár & Partner Patentanwälte PartG mbB

(56) References cited:
- EP-A1- 3 726 602
- KR-A- 20210 050 927

## Description

### TECHNICAL FIELD

The disclosure and implementations disclosed in this patent document generally relate to a battery cell including a case, a battery device including the same, and a case manufacturing process.

### BACKGROUND

Secondary batteries, unlike primary batteries, may be charged and discharged, and may be applied to devices within various fields such as digital cameras, mobile phones, laptops, hybrid cars, electric cars, and energy storage systems (ESS). Secondary batteries may be lithium-ion batteries, nickel-cadmium batteries, nickel-metal hydride batteries, or nickel-hydrogen batteries.

Secondary batteries are manufactured as flexible pouch-type battery cells or rigid prismatic or cylindrical can-type battery cells. A plurality of battery cells may be formed into a cell assembly in a stacked form. KR 2021 0050927 A and EP 3 726 602 A1 disclose a battery cell including a case, an electrode assembly and a cap assembly, and a manufacturing process of a battery cell case.

### SUMMARY

The present disclosure may be implemented in some embodiments to provide a battery cell including an electrode assembly, a case housing the electrode assembly, and a cap assembly sealing an opening of the case and electrically connected to the electrode assembly.

The case may be manufactured using a pressurizing process. For example, the case may be manufactured by folding at least a portion of a plate. Edges (for example, joints) of the plate may be joined to each other, thereby forming the case in a closed curve shape and forming an opening.

However, a welding bead may be formed by joining the edges of the plate. A portion of the welding bead may protrude toward the cap assembly and contact a portion (for example, a cap plate) of the cap assembly. In the case in which the welding bead contacts the cap assembly (for example, the cap plate), a gap may be formed between the cap assembly and the case, and the bonding force between the cap assembly and the case may be reduced.

The present disclosure may be implemented in some embodiments to provide a battery cell that may reduce a bonding failure of a cap assembly to a case.

The present disclosure may be implemented in some embodiments to provide a battery cell in which a gap between a cap assembly and a case is prevented.

The present disclosure may be implemented in some embodiments to provide a battery cell and a battery device that may be widely applied to green technology fields such as electric vehicles, battery charging stations, and solar power generation and wind power generation using batteries. In addition, the battery cell and the battery device may be used in eco-friendly electric vehicles and hybrid vehicles to ameliorate the effects of climate change by suppressing air pollution and greenhouse gas emissions. The invention is defined in the appended claims.

According to the invention, a battery cell includes a case including a first edge forming an opening and a joining portion positioned perpendicular to the first edge, an electrode assembly accommodated within the case, and a cap assembly coupled to the case and sealing the opening. The case includes a center area facing the electrode assembly, an end area surrounding at least a portion of the cap assembly, and a groove extending from the end area and accommodating a welding bead formed in the joining portion. The end area includes a mounting surface that contacts the cap assembly. The groove is formed toward the inside of the case on the mounting surface.

The opening may include a first opening formed in one side of the battery cell and a second opening formed on the other side of the battery cell. The cap assembly may include a first cap assembly sealing the first opening and a second cap assembly sealing the second opening.

The end area may include a first end area forming the first opening and a second end area forming the second opening. The joining portion may extend from the first end area to the second end area by passing the center area.

The groove may include a first groove extending from the first end area and facing at least a portion of the first cap assembly, and a second groove extending from the second end area and facing at least a portion of the second cap assembly.

A second thickness of the end area may be thinner than a first thickness of the center area.

The joining portion may be formed in a first direction. The case may include a plurality of bending portions folded based on a direction, parallel to the first direction.

The groove may be located between the end area and the center area.

The case may include an outer surface facing an outside of the battery cell and an inner surface opposite to the outer surface. The welding bead may be located on the inner surface of the case.

The case may include at least one of aluminum or stainless steel.

The end area and the groove may be formed using forging.

The case may include a plurality of second edges perpendicular to the first edge. The joining portion may be formed by welding the plurality of second edges.

In some embodiments of the present disclosure, a battery device includes a cell assembly including a plurality of battery cells according to claim 1, and a frame including the cell assembly. The plurality of battery cells each include a case including a first edge forming an opening and a joining portion positioned perpendicular to the first edge, an electrode assembly accommodated within the case, and a cap assembly coupled to the case and sealing the opening. The case includes a center area facing the electrode assembly, an end area surrounding at least a portion of the cap assembly, and a groove extending from the end area and receiving a welding bead formed in the joining portion.

In some embodiments of the present disclosure, a process of manufacturing a case of the battery cell of claim 1 includes a preparatory process of preparing a plate including a plurality of first edges and a plurality of second edges perpendicular to the plurality of first edges, a punching process of forming a through-hole in the plate, a pressurizing process of forming an end area in the plurality of first edges of the plate and a groove in a portion of the plurality of second edges, a bending process of bending at least a portion of the plate, and a joining process of joining the plurality of second edges.

The plate may include a center area surrounded by the plurality of first edges and the plurality of second edges, and the groove may be located between the end area and the center area.

The joining process may form a welding bead on an inner surface of the case. The groove may receive at least a portion of the welding bead.

### BRIEF DESCRIPTION OF DRAWINGS

Certain aspects, features, and advantages of the present disclosure are illustrated by the following detailed description with reference to the accompanying drawings.
FIG. 1 is a perspective view of a battery cell according to preferred embodiment.
FIG. 2 is an exploded perspective view of a battery cell according to preferred embodiment.
FIG. 3 is a perspective view of a case according to preferred embodiment.
FIG. 4A is a perspective view of a case according to preferred embodiment, and FIG. 4B is a perspective view of a case according to another preferred embodiment.
FIG. 5 is a schematic diagram of a battery cell illustrating the coupling of a case and a cap assembly according to preferred embodiment.
FIG. 6 is a cross-sectional perspective view of a battery cell including a case and a cap assembly according to preferred embodiment.
FIGS. 7A, 7B, 7C, 7D, and 7E are a schematic diagram illustrating a case manufacturing process according to preferred embodiment.
FIG. 8 is a flowchart of a case manufacturing process according to preferred embodiment.
FIG. 9 is an exploded perspective view of a battery device according to preferred embodiment.

### DETAILED DESCRIPTION

Features of the present disclosure disclosed in this patent document are described by example embodiments with reference to the accompanying drawings.

Hereinafter, the present disclosure will be described in detail with reference to the attached drawings. However, this is merely illustrative and the present disclosure is not limited to the detailed embodiments described as examples. The present invention is defined in the appended claims.

Terms or words used in the present specification and claims described below are not to be construed as limited to their conventional or dictionary meanings. The inventor will interpret the terms in the sense and concept that are consistent with the technical idea of the present disclosure based on the principle that the inventor may appropriately define the concept of the term in order to explain his or her own invention in the best way.

Detailed descriptions of known functions and configurations that may obscure the gist of the present disclosure are omitted. In the attached drawings, some components are exaggerated, omitted, or schematically illustrated, and the size of each component does not entirely reflect the actual size thereof.

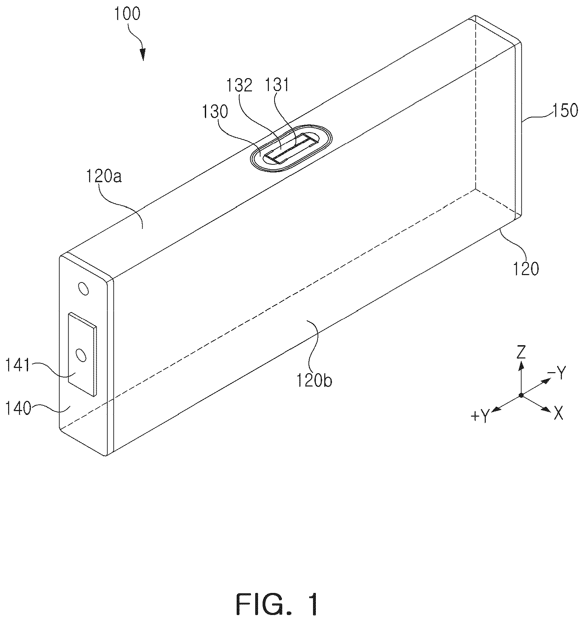

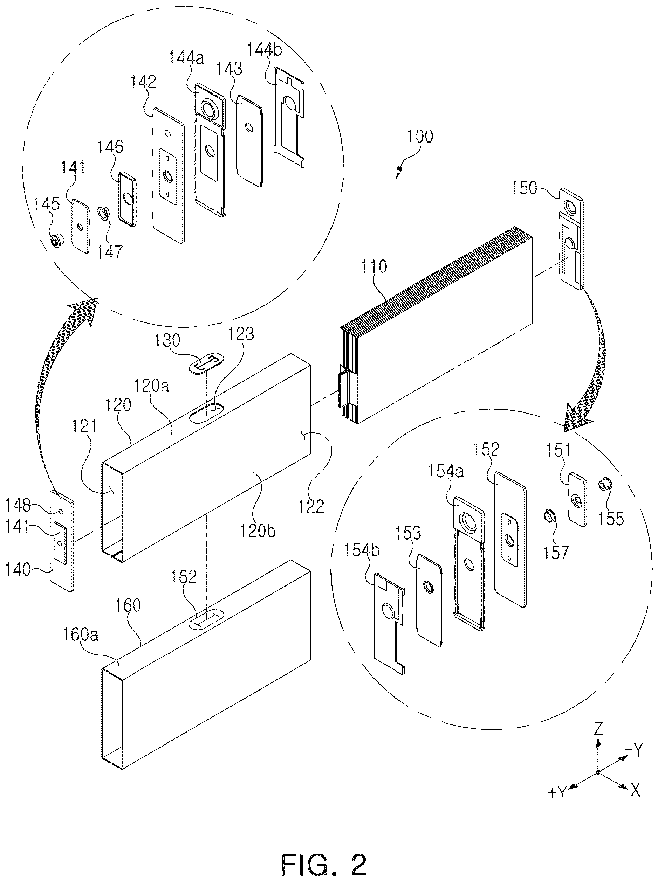

FIG. 1 is a perspective view of a battery cell according to preferred embodiment. FIG. 2 is an exploded perspective view of a battery cell according to preferred embodiment.

Referring to FIG. 1 and/or FIG. 2, a battery cell 100 may include an electrode assembly 110, a case 120, a venting portion 130, cap assemblies 140 and 150, and/or an insulating bag 160. The battery cell 100 may be a secondary battery. For example, the battery cell 100 may be a lithium ion battery, but is not limited thereto. For example, the battery cell 100 may be a nickel-cadmium battery, a nickel-metal hydride battery, or a nickel-hydrogen battery capable of being charged and discharged.

The electrode assembly 110 may include at least one positive electrode plate, at least one negative electrode plate, and at least one separator. The separator may prevent contact between the positive electrode plate and the negative electrode plate. Those skilled in the art will appreciate that the electrode assembly 110 may be manufactured using a variety of methods. In example embodiments, the positive electrode, the negative electrode, and the separator may be repeatedly disposed to form the electrode assembly. In some embodiments, the electrode assembly may be a winding type, a stacking type, a z-folding type, or a stack-folding type.

The case 120 forms at least a portion of the exterior of the battery cell 100 and accommodates the electrode assembly 110. For example, the case 120 may provide a space in which the electrode assembly 110 and the electrolyte are accommodated. In preferred embodiment, the case 120 may include aluminum. The case 120 may be referred to as a can or a housing. The case 120 may have a substantially rectangular shape that is partially open. For example, the case 120 may include a first side 120a and a second side 120b having a width greater than that of the first side 120a. The first side 120a may be referred to as a narrow side, and the second side 120b may be referred to as a wide side.

According to preferred embodiment, the case 120 may include a first opening 121 formed in one side (+Y direction) of the battery cell 100, and a second opening 122 formed in the other side (-Y direction) of the battery cell 100, in the longitudinal direction (Y-axis direction) of the battery cell, and a through-hole 123 formed in the height direction (Z-axis direction) of the battery cell 100. The first opening 121, the second opening 122, and the through-hole 123 may each be an empty space connected in the internal space of the case 120. For example, the first opening 121 may be an empty space extending from the second opening 122.

The venting portion 130 may provide a path for releasing gas generated inside the case 120 to the outside of the case 120. For example, the venting portion 130 may include a notch portion 131 configured to be ruptured at a specified pressure or higher, and a base 132 coupled to the case 120.

According to preferred embodiment, the venting portion 130 may be located on a first side 120a of the case 120 where a relatively large stress value appears among the remaining surfaces of the case 120 excluding the portion where the cap assemblies 140 and 150 are coupled. The venting portion 130 may be located between the first cap assembly 140 and the second cap assembly 150. According to preferred embodiment, at least a portion of the venting portion 130 may be positioned within a through-hole 123 formed in the first side 120a.

In a battery cell 100 including a plurality of cap assemblies 140 and 150 positioned on both sides of the length direction of the case 120 as in preferred embodiment, the space available for one cap assembly 140, 150 may be reduced. Since the venting portion 130 is formed on the case 120, the design freedom of the venting portion 130 is improved, and the discharge of gas inside the case 120 may be improved. In this document, the venting portion 130 formed on the first side 120a of the case 120 is illustrated, but this is illustrative. For example, in another embodiment, the venting portion 130 may be positioned on the cap assemblies 140 and 150.

According to preferred embodiment, the base 132 may be welded and joined to the case 120 along the edge portion. The base 132 may be a plate including aluminum.

According to preferred embodiment, the notch portion 131 may be a recess, groove, and/or hole formed in the base 132. The notch portion 131 may be a portion of the venting portion 130 that is ruptured earlier than other portions when the pressure inside the case 120 is a predetermined pressure or more. The thickness of at least a portion of the notch portion 131 may be thinner than the thickness of the base 132. Since at least a portion of the gas generated inside the case 120 is discharged through the empty space of the venting portion 130 formed as the notch portion 131 is ruptured, the gas discharge direction may be controlled from the perspective of the battery cell 100.

The cap assemblies 140 and 150 may be respectively coupled to both sides of the longitudinal direction (for example, Y-axis direction) of the case 120. For example, the cap assemblies 140 and 150 may accommodate the electrode assembly 110 and the electrolyte together with the case 120. The cap assemblies 140 and 150 may include a first cap assembly 140 coupled to an end of one side (for example, +Y direction) of the case 120 and a second cap assembly 150 coupled to an end of the other side (for example, -Y direction) of the case 120. The first cap assembly 140 may seal a first opening 121 of the case 120. The second cap assembly 150 may seal a second opening 122 of the case 120.

The cap assemblies 140 and 150 may include a plurality of components.

In preferred embodiment, the cap assemblies 140 and 150 may include cap plates 142 and 152 that are coupled to the case 120 to seal the case 120. For example, the cap plates 142 and 152 may be formed of aluminum or a material including aluminum. The cap plates 142 and 152 may be laser welded to the case 120 along the edge portion. When the cap plates 142 and 152 are coupled to the case 120, the interior of the case 120 is sealed, and thus, at least one of the cap plates 142 and 152 may include an electrolyte injection port 148 through which an electrolyte is injected into the interior of the case 120. The electrolyte injection port 148 may be sealed with a stopper or the like after the electrolyte is injected.

The cap assemblies 140 and 150 may include terminal plates 141 and 151. The terminal plates 141 and 151 may be joined to one side of the cap plates 142 and 152. One side of the cap plates 142 and 152 may be the opposite side of the side facing the inside of the case 120. When configuring a module or pack, the battery cells 100 may be electrically connected to adjacently disposed battery cells 100 through the terminal plates 141 and 151.

The terminal plates 141 and 151 may have positive electrode or negative electrode polarity. For example, based on the drawings, the first terminal plate 141 disposed on one side of the case 120 (for example, in the +Y direction) may have negative electrode polarity, and the second terminal plate 151 disposed on the other side of the case 120 (for example, in the - Y direction) may have positive electrode polarity. For example, the terminal plates 141 and 151 may respectively be electrically connected to the electrode assembly 110 through electrode tabs.

The cap assemblies 140 and 150 may include current collector plates 143 and 153 disposed on the other surfaces of the cap plates 142 and 152. The current collector plates 143 and 153 may be connected to the negative electrode plate or the positive electrode plate of the electrode assembly 110, respectively, and may have a negative electrode or positive electrode polarity. In addition, insulating plates (inner insulating plates) 144a, 144b, 154a and 154b) may be disposed between the cap plates 142 and 152 and the current collector plates 143 and 153 and between the current collector plates 143 and 153 and the inner space of the case 120, respectively. In preferred embodiment, at least some of the insulating plates 144a, 144b, 154a and 154b may be replaced with a resistance plate.

In preferred embodiment, the cap assemblies 140 and 150 may include rivet terminals 145 and 155 that pass in the thickness direction from the terminal plates 141 and 151 to the current collector plates 143 and 153. To this end, the cap plates 142 and 152, the terminal plates 141 and 151, the current collector plates 143 and 153, and some insulating plates 144a and 154a may include holes into which rivet terminals 145 and 155 are inserted, and gaskets 147 and 157 may be fitted between the holes and the rivet terminals 145 and 155.

According to preferred embodiment, some (for example, the first cap assembly 140) of the cap assemblies 140 and 150 may include an insulating plate 146 (for example, an outer insulating plate) disposed between the first terminal plate 141 and the first cap plate 142.

The components of the cap assemblies 140 and 150 described above are only examples, and thus, some of the components of the cap assemblies 140 and 150 may be omitted or other configurations not described may be added.

The insulating bag 160 may be used to insulate the case 120 of the battery cell 100. For example, the insulating bag 160 may include an insulating material. The insulating bag 160 may be referred to as a tape, a protective film, a protective member, a protective tape, an insulating film, an insulating member, and/or an insulating tape. According to preferred embodiment, the insulating bag 160 may include an adhesive material for bonding with the case 120 and the venting portion 130.

The insulating bag 160 may cover at least a portion of the case 120. In this document, the insulating bag 160 is illustrated as covering the entirety of the case 120, but the location where the insulating bag 160 covers the case 120 may be changed depending on the design. For example, in preferred embodiment, one side 160a of the insulating bag 160 may cover at least a portion of the venting portion 130 and the first side 120a of the case 120. According to preferred embodiment, at least a portion of the insulating bag 160 may be folded so as to overlap.

In preferred embodiment, the cover area 162 of the insulating bag 160 may cover the venting portion 130. At least a portion (for example, cover area 162) of the insulating bag 160 may come into contact with at least a portion of the venting gas that has passed through the notch portion 131 of the venting portion 130 after the notch portion 131 of the venting portion 130 is broken, and may be melted.

In this document, a structure in which the battery cell 100 is a prismatic battery cell with open sides in both directions is illustrated, but this is illustrative. For example, in preferred embodiment not illustrated, the battery cell 100 may be a prismatic battery cell with open sides in one direction.

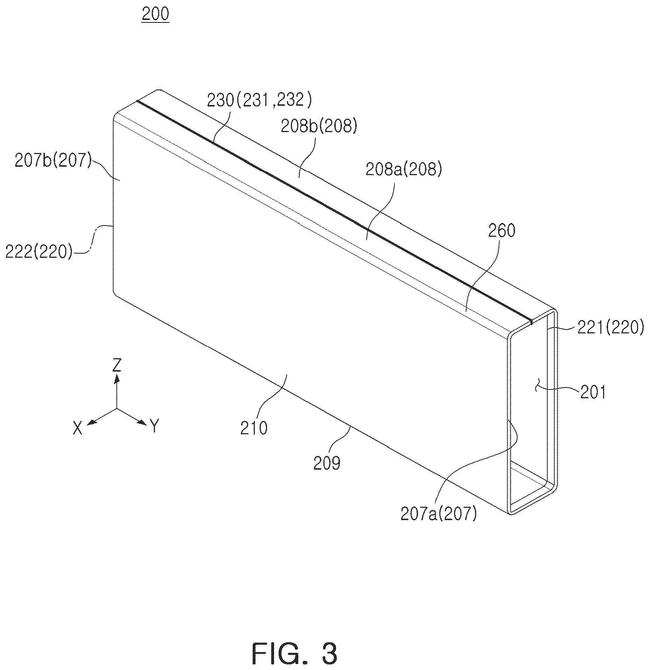

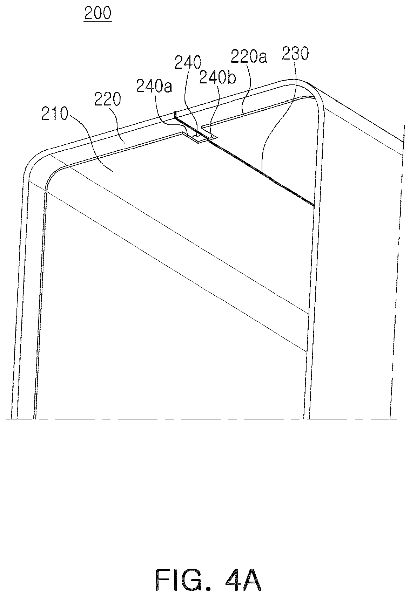

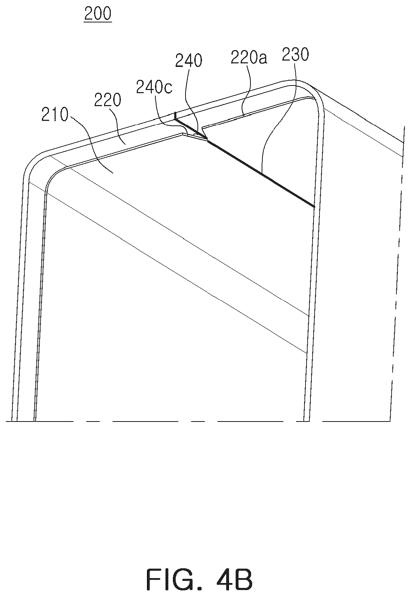

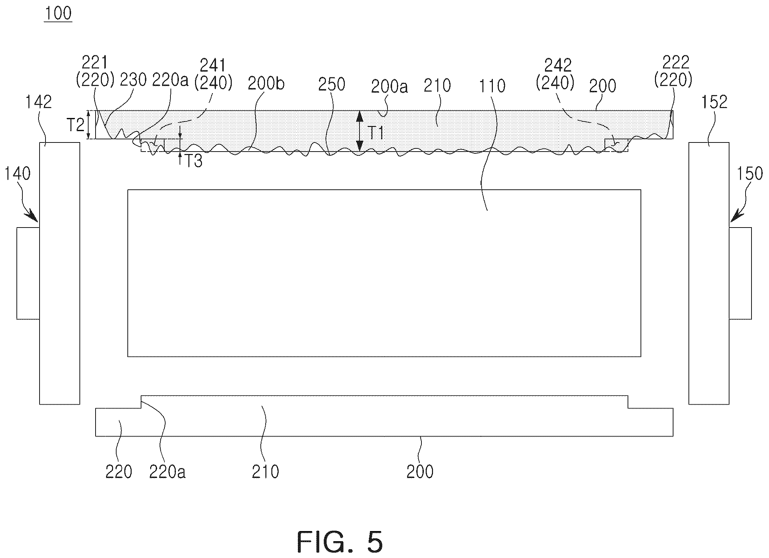

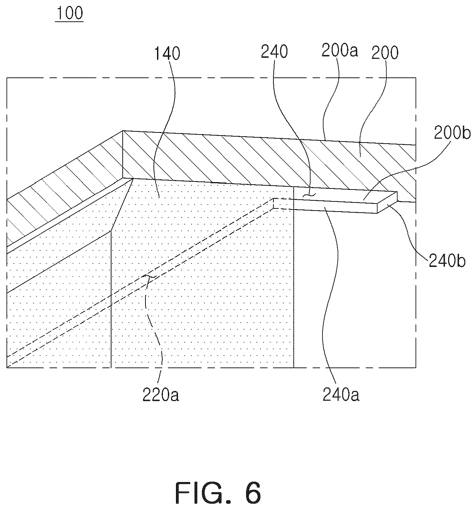

FIG. 3 is a perspective view of a case according to preferred embodiment. FIG. 4A is a perspective view of a case according to preferred embodiment. FIG. 4B is a perspective view of a case according to another preferred embodiment. FIG. 5 is a schematic diagram of a battery cell illustrating the combination of a case and a cap assembly according to preferred embodiment. FIG. 6 is a cross-sectional perspective view of a battery cell including a case and a cap assembly according to preferred embodiment.

Referring to FIGS. 3, 4A, 4B, 5, and/or 6, a battery cell 100 includes an electrode assembly 110, cap assemblies 140 and 150, and a case 200. The case 200 includes a center area 210, an end area 220, a joining portion 230, a groove 240, and a bending portion 260. At least some of the descriptions of the battery cell 100, the electrode assembly 110, the case 120, and the cap assemblies 140 and 150 of FIGS. 1 and/or 2 may be applied to a battery cell 100, an electrode assembly 110, a case 200, and cap assemblies 140 and 150 of FIGS. 3, 4A, 4B, 5, and/or 6.

The case 200 may accommodate at least some of the components of the battery cell (for example, the battery cell 100 of FIG. 1). For example, the case 200 may include a center area 210 surrounding at least some of the electrode assembly (for example, the electrode assembly 110 of FIG. 2) and an end area 220 extending from the center area 210. The end area 220 may form an end of the case 200.

The end area 220 may be connected to a cap assembly (for example, the cap assemblies 140 and 150 of FIG. 2). The cap assemblies 140 and 150 may be coupled to the end area 220 of the case 200. The end area 220 surrounds at least a portion of the cap assemblies 140 and 150. The end area 220 includes a mounting surface 220a that contacts the cap assemblies 140 and 150. The mounting surface 220a may be formed in a shape corresponding to the cap plates 142 and 152.

The end area 220 may include a first end area 221 connected to the first cap assembly 140 and a second end area 222 connected to the second cap assembly 150. The center area 210 may be located between the first end area 221 and the second end area 222.

The case 200 may be formed in a shape in which the cap assemblies 140 and 150 may be mounted. For example, the case 200 may have different thicknesses for respective sections. A second thickness T2 of the end area 220 may be thinner than a first thickness T1 of the center area 210. By forming the second thickness T2 of the end area 220 thinner than the first thickness T1 of the center area 210, unintended movement of the cap assemblies 140 and 150 may be prevented. For example, the end area 220 may be in contact with the cap assemblies 140 and 150, and movement of the cap assemblies 140 and 150 into the case 200 may be prevented. In preferred embodiment, the sum of a depth T3 of the groove 240 and the second thickness T2 of the end area 220 may be substantially equal to the first thickness T1 of the center area 210.

The case 200 may be formed by the plate 209 being folded multiple times. For example, the case 200 may include a plurality of bending portions 260. The plate 209 may be a metal having a substantially rectangular shape. For example, the case 200 may be the plate 209 folded such that an opening 201 (for example, the first opening 121 and/or the second opening 122 of FIG. 2) is formed. In preferred embodiment, the plate 209 may be folded based on a direction parallel to the joining portion 230. For example, the plate 209 may be folded multiple times along the first direction (for example, the Y-axis direction). The case 200 may include a plurality of bending portions 260 folded based on a direction, parallel to the first direction (the Y-axis direction). The plate 209 may include a first edge 207 and a second edge 208 perpendicular to the first edge 207. The first edge 207 may be at least a portion of the end area 220. For example, the end area 220 may form the first edge 207. The first edges 207 may be provided in multiple numbers. For example, the first edge 207 may include a first-first edge 207a located in the first end area 221 and a first-second edge 207b located in the second end area 222. The second edge 208 may include a second-first edge 208a and a second-second edge 208b parallel to the second-first edge 208a. In preferred embodiment, the joining portion 230 may be formed on a narrow surface (for example, the first side 120a of FIG. 1) of the case 120.

The case 200 may be formed by welding a folded plate 209. The case 200 may include a joining portion 230. The joining portion 230 may be formed by welding a plurality of second edges 208a and 208b. The joining portion 230 may extend from the first end area 221 through the center area 210 to the second end area 222. For example, the joining portion 230 may be a joint formed along the first direction (Y-axis direction). The joining portion 230 may be joined by a welding line formed along the first direction (Y-axis direction).

The joining portion 230 may be formed to be substantially perpendicular to the end area 220. For example, the case 200 may include an end area 220 located at an end in a first direction (Y-axis direction) and joining areas 231, 232 located at an end in a second direction (X-axis direction) perpendicular to the first direction (Y-axis direction). The joining areas 231, 232 may form at least a portion of an end in the X-axis direction of the plate 209. The joining portion 230 may be formed by welding the first joining area 231 and the second joining area 232.

The case 200 may be manufactured from a material that allows a welding process and a bending process. For example, the case 200 may be formed of a metal having rigidity of a specified degree or more. In preferred embodiment, the case 200 may include at least one of aluminum or stainless steel.

The case 200 may include a joining portion 230 and/or a welding bead 250 formed around the joining portion 230. The welding bead 250 may be a portion of the plate 209 formed when the molten parent material (for example, the plate 209) is solidified when the second edges 208a and 208b of the case 200 are joined by welding. For example, the welding bead 250 may be a plurality of protrusions or a plurality of projections formed during the welding process of the joining portion 230. The welding bead 250 may form an irregular surface on the inner surface 200b of the case 200. The case 200 may include an outer surface 200a facing the outside of the battery cell 100 and an inner surface 200b opposite to the outer surface 200b. The welding bead 250 may be formed on the inner surface 200b of the case 200. For example, the welding bead 250 may be formed on the inner surface 200b of the case 200 where the joining portion 230 is located. When the welding bead 250 comes into contact with the cap plates 142 and 152, the bonding force between the cap plates 142 and 152 and the case 200 may be reduced. For example, the welding bead 250 may reduce the contact area between the cap plates 142 and 152 and the end area 220 of the case 200.

The case 200 includes a groove 240. The groove 240 accommodates at least a portion of the welding bead 250 formed on the joining portion 230. As the groove 240 accommodates at least a portion of the welding bead 250, direct contact between the welding bead 250 and the cap assemblies 140 and 150 may be prevented. For example, at least a portion of the welding bead 250 may be located within the groove 240. For example, the end area 220 may surround at least portions of the edges of the cap plates 142 and 152 of the cap assemblies 140 and 150 and come into contact with the cap plates 142 and 152. By preventing direct contact between the welding bead 250 and the cap assemblies 140 and 150, the bonding force of the cap assemblies 140 and 150 to the case 200 and the assembly position accuracy of the cap assemblies 140 and 150 may be increased. By accommodating the welding bead 250 in the groove 240, the occurrence of a gap between the cap assemblies 140 and 150 and the case 200 may be prevented. The groove 240 extends from the end area 220. For example, the groove 240 may be a hollow space (for example, a recess) extending from the end area 220 toward the inside of the case 200. The groove 240 may be located between the end area 220 and the center area 210.

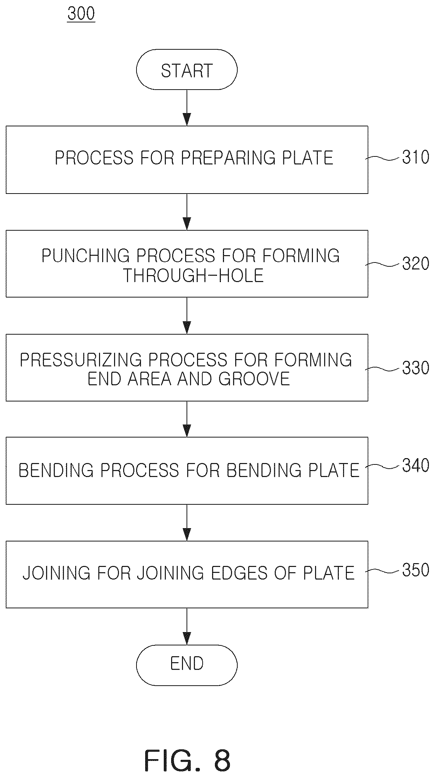

The groove 240 may face at least portions of the cap assemblies 140 and 150. For example, the groove 240 may face portions of the edges of the cap plates 142 and 152. Since the groove 240 accommodates the welding bead 250, contact between the cap plates 142 and 152 and the welding bead 250 may be prevented. For example, in a joining process (for example, joining process 350 of FIG. 8), contact between the welding bead 250 and the cap plates 142 and 152 may be prevented since a portion of the molten plate 209 flows into the inside of the groove 240. The groove 240 is a groove formed toward the inside of the case 200 on the mounting surface 220a.

The shape of the groove 240 may be selectively designed. For example, the structure of the groove 240 is not limited to a structure formed in the first joining region 231 and/or the second joining region 232 in order to accommodate the welding bead 250 formed in the joining portion 230. According to preferred embodiment (for example, see FIG. 4A), the groove 240 may have a substantially triangular cross-sectional shape. For example, the groove 240 may include a first surface 240a substantially perpendicular to the mounting surface 220a, and a second surface 240b at least a portion of which is substantially perpendicular to the first surface 240a and substantially parallel to the mounting surface 220a. According to preferred embodiment (for example, see FIG. 4B), the groove 240 may have a substantially triangular cross-sectional shape. For example, the groove 240 may include a third surface 240c that is inclined with respect to the mounting surface 220a.

The groove 240 may include a first groove 241 extending from the first end area 221 and a second groove 242 extending from the second end area 222.

The first groove 241 may face at least a portion of the first cap assembly 140 (for example, the first cap plate 142). The first groove 241 may prevent contact between the welding bead 250 and the first cap plate 142 and increase a contact area between the first cap plate 142 and the first end area 221. The second groove 242 may face at least a portion of the second cap assembly 150 (for example, the second cap plate 152). The second groove 242 may prevent contact between the welding bead 250 and the second cap plate 152 and increase the contact area between the second cap plate 152 and the second end area 222.

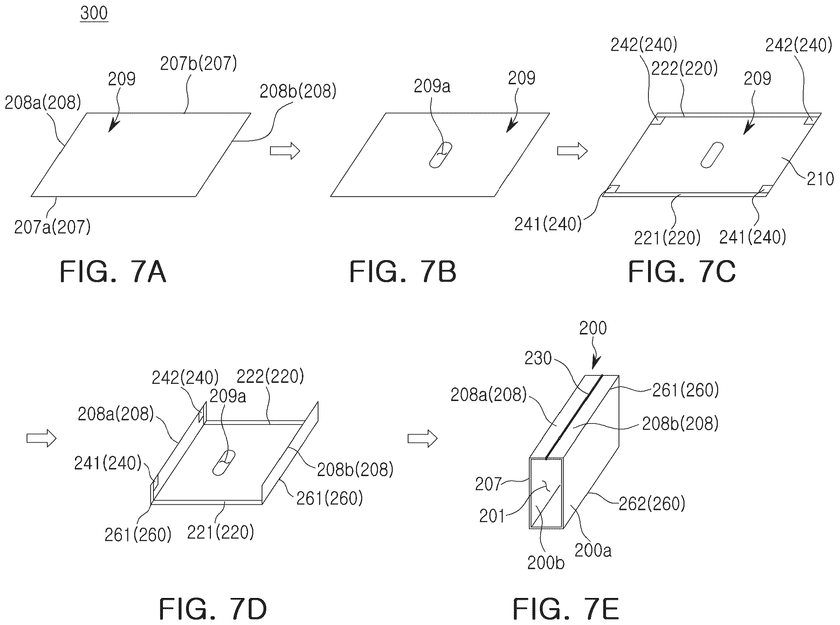

FIGS. 7A, 7B, 7C, 7D, and 7E are a schematic diagram illustrating a case manufacturing process according to preferred embodiment. FIG. 8 is a flowchart of a case manufacturing process according to preferred embodiment.

Referring to FIGS. 7A, 7B, 7C, 7D, and 7E, and/or FIG. 8, the case manufacturing process 300 may include a process 310 for preparing a plate 209, a punching process 320 for forming a through-hole 209a, a pressurizing process 330 for forming an end area 220 and a groove 240, a bending process 340 for bending the plate, and a joining process 350.

The description of the case 200 of FIG. 3 to FIG. 6 may be applied to the case 200 of FIGS. 7A, 7B, 7C, 7D, and 7E. For example, the case manufacturing process 300 of FIGS. 7A, 7B, 7C, 7D, and 7E and 8 may be a manufacturing process for manufacturing the case 200 of FIGS. 3 to 6.

In the process 310 of preparing the plate 209 (for example, FIG. 7A), the plate 209 may be substantially a metal plate or a metal sheet. The plate 209 may include a metal (for example, aluminum and/or stainless steel) that is capable of welding and pressurizing processes. The plate 209 may include a plurality of first edges 207 and a plurality of second edges 208 perpendicular to the plurality of first edges 207. The first edges 207 may include a first-first edge 207a and a first-second edge 207b parallel to the first-first edge 207a.

In the punching process 320 (for example, FIG. 7B), a through-hole 209a may be formed in the plate 209. In preferred embodiment, the through-hole 209a may accommodate a venting portion (for example, the venting portion 130 of FIG. 1). In another embodiment, the through-hole 209a may be a notch for venting gas discharge.

In the pressurizing process 330 (for example, FIG. 7C), at least a portion of the end area 220 and the groove 240 may be formed. For example, the pressurizing process 330 may be a forging process that pressurizes portions of the plate 209 to form the end area 220 and the groove 240. The end area 220 may be formed adjacent to the opening 201 of the plate 209. For example, the end area 220 may be formed on the first edge 207 of the plate 209. The groove 240 may be formed adjacent to the vertex of the plate 209. For example, the groove 240 may extend from the end area 220 adjacent to the second edge 208. In preferred embodiment, the groove 240 may be formed on each of the plurality of second edges 208.

In preferred embodiment, the end area 220 and the groove 240 may be formed using a single pressurizing device. For example, the pressurizing device may be formed in a shape corresponding to the end area 220 and the groove 240 and may provide pressure to the plate 209. In another embodiment, the end area 220 and the groove 240 may be formed using different pressurizing devices, respectively.

At least a portion of the plate 209 may be bent using the bending process 340 (for example, FIGS. 7D and 7E). For example, the bending process 340 may include a first bending process for bending a portion of the plate 209 where the second edge 208 is positioned. The case 200 may include a first bending portion 261 formed adjacent to the groove 240. The first bending portion 261 may be a portion of the case 200 formed by the first bending process.

The bending process 340 may include a second bending process for forming a second bending portion 262 spaced apart from the first bending portion 261. The case 200 may be formed as a closed curve with an opening 201 formed by the second bending process. The case 200 including the first bending portion 261 and the second bending portion 262 may include an opening 201. The first edge 207 may form the opening 201. For example, at least a portion of the opening 201 may be a hollow space surrounded by the first edge 207. In the bending process 340, the plate 209 may be bent along a direction substantially the same as the direction in which the second edge 208 extends. By forming the case 200 by the bending process 340, an end area 220 and a groove 240 may be formed on the inner surface 200b of the case 200.

The joining process 350 (for example, FIG. 7E) may join the edges (for example, a plurality of second edges 208) of the plate 209. For example, by the joining process 350, the plurality of second edges 208a and 208b may be welded to each other to form a joining portion 230. After the bending process 340, the plurality of second edges 208 may be joined to each other.

By the joining process 350, a welding bead (for example, a welding bead 250 in FIG. 5) may be generated on the inner surface 200b of the case 200. The groove 240 may accommodate at least a portion of the welding bead 250 formed by the joining process 350.

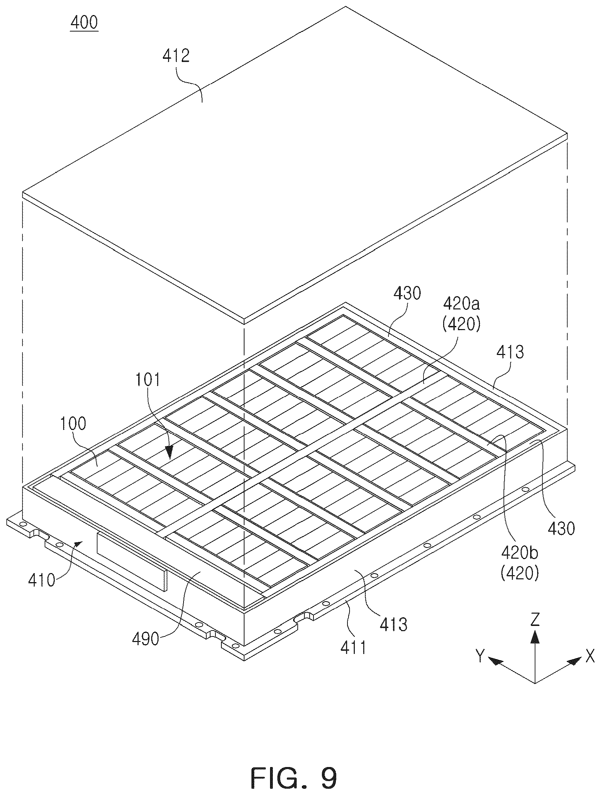

FIG. 9 is a perspective view of a battery device according to preferred embodiment.

Referring to FIG. 9, the battery device 400 may include a plurality of cell assemblies 101 and a frame 410 that accommodates the plurality of cell assemblies 101.

The plurality of cell assemblies 101 may each include a plurality of battery cells 100. The plurality of battery cells 100 may each be prismatic battery cells that include a case 200. For example, the descriptions of the battery cells 100 and/or the cases 120 and 200 described in FIGS. 1 to 6 may be applied to the battery cells 100 of FIG. 9.

The battery device 400 may be referred to as a battery module or a battery pack.

The frame 410 may accommodate components of the battery device 400 (for example, cell assemblies 101). The frame 410 may include a bottom member 411 supporting the battery cells 100, a cover member 412 covering the cell assemblies 101, and a side wall 413 surrounding at least a portion of the bottom member 411 and the cover member 412.

The frame 410 may include a partition wall 420 that crosses at least a portion of the plurality of cell assemblies 101. For example, the receiving space of the frame 410 may be divided into a plurality of spaces by the partition wall 420. The partition wall 420 may be installed across the receiving space to reinforce the rigidity of the frame 410. In preferred embodiment, the partition wall 420 may include a first partition wall 420a that crosses the plurality of cell assemblies 101 and a plurality of second partition walls 420b that are substantially perpendicular to the first partition wall 420a.

In preferred embodiment, the battery device 400 may include a duct member 430. The duct member 430 may include an exhaust space for providing a path for gases and/or flames discharged from the battery cells 100. The duct member 430 may be disposed within the frame 410. The duct member 430 may surround at least a portion of the cell assembly 101. For example, gases and/or flames generated from the battery cells of the cell assembly 101 (for example, the battery cells 100 of FIG. 1) may pass through the exhaust space of the duct member 430 to the exterior of the battery device 400. In the present disclosure, the duct member 430 may be referred to as an exhaust duct, or an exhaust member.

The battery device 400 may include a battery control unit 490 for controlling the battery cells 100. The battery control unit 490 may be placed within the frame 410. The battery control unit 490 may include a battery management system (BMS). The configuration of the battery control unit 490 is known in various forms, so a detailed description thereof will be omitted. In preferred embodiment, the battery control unit 490 may be referred to as a processor.

The structure of the battery device 400 of FIG. 9 is illustrative. For example, the number of battery cells 100 included in the battery device 400, the structure of the frame 410 and/or the duct member 430 may be selectively designed.

As set forth above, according to preferred embodiment, a bonding failure of a cap assembly to a case may be reduced.

According to preferred embodiment, occurrence of a gap between a cap assembly and a case may be prevented.

## Claims

1. A battery cell cell (100) comprising:
a case (120) including a first edge (207) forming an opening (201) and a joining portion (230) positioned perpendicular to the first edge (207);
an electrode assembly (110) accommodated within the case (120); and
a cap assembly (140, 150) coupled to the case (120) and sealing the opening (201),
wherein the case (120) includes a center area (210) facing the electrode assembly (110), an end area (220) surrounding at least a portion of the cap assembly (140, 150), and a groove (240) extending from the end area (220) and accommodating a welding bead (250) formed in the joining portion (230),
wherein the end area (220) includes a mounting surface (220a) that contacts the cap assembly (140, 150), and
wherein the groove (240) is formed toward the inside of the case (200) on the mounting surface (220a).

2. The battery cell (100) of claim 1, wherein the opening (201) includes a first opening formed in one side of the battery cell (100) and a second opening formed in the other side of the battery cell (100), and
the cap assembly includes a first cap assembly (140) sealing the first opening and a second cap assembly (150) sealing the second opening.

3. The battery cell (100) of claim 2, wherein the end area (220) includes a first end area (221) forming the first opening and a second end area (222) forming the second opening, and
the joining portion (230) extends from the first end area (221) to the second end (222) area by passing the center area.

4. The battery cell (100) of claim 3, wherein the groove (240) includes a first groove (241) extending from the first end area (221) and facing at least a portion of the first cap assembly (140), and a second groove (242) extending from the second end area (222) and facing at least a portion of the second cap assembly (150).

5. The battery cell (100) of any one of claims 1 to 4, wherein a second thickness (T2) of the end area (220) is thinner than a first thickness (T1) of the center area (210).

6. The battery cell (100) of any one of claims 1 to 5, wherein the joining portion (230) is formed in a first direction, and
the case (120) includes a plurality of bending portions folded based on a direction, parallel to the first direction.

7. The battery cell (100) of any one of claims 1 to 6, wherein the groove (240) is located between the end area (220) and the center area (210).

8. The battery cell (100) of any one of claims 1 to 7, wherein the case (120) includes an outer surface (200a) facing an outside of the battery cell (100) and an inner surface (200b) opposite to the outer surface (200a), and
the welding bead (250) is located on the inner surface (200b) of the case (120).

9. The battery cell (100) of any one of claims 1 to 8, wherein the case (120) includes at least one of aluminum or stainless steel.

10. The battery cell (100) of any one of claims 1 to 9, wherein the end area (220) and the groove (240) are formed using forging.

11. The battery cell (100) of any one of claims 1 to 10, wherein the case (120) includes a plurality of second edges (208) perpendicular to the first edge (207), and
the joining portion (230) is formed by welding the plurality of second edges (208).

12. A battery device (400) comprising:
a cell assembly (101) including a plurality of battery cells (100) according to claim 1; and
a frame (410) including the cell assembly (101),
wherein the plurality of battery cells (100) each include,
a case (120) including a first edge (207) forming an opening and a joining portion (230) positioned perpendicular to the first edge (207),
an electrode assembly (110) accommodated within the case (120), and
a cap assembly (140, 150) coupled to the case (120) and sealing the opening, and
the case (120) includes a center area (210) facing the electrode assembly (110), an end area (220) surrounding at least a portion of the cap assembly (140, 150), and a groove (240) extending from the end area (220) and receiving a welding bead (250) formed in the joining portion (230).

13. A process of manufacturing a case (120) of the battery cell (100) according to claim 1, comprising:
a preparatory process of preparing a plate including a plurality of first edges (207) and a plurality of second edges (208) perpendicular to the plurality of first edges (207);
a punching process of forming a through-hole in the plate;
a pressurizing process of forming an end area (220) in the plurality of first edges (207) of the plate and a groove (240) in a portion of the plurality of second edges (208);
a bending process of bending at least a portion of the plate; and
a joining process of joining the plurality of second edges (208).

14. The process of manufacturing the case (120) of claim 13, wherein the plate includes a center area (210) surrounded by the plurality of first edges (207) and the plurality of second edges (208), and the groove (240) is located between the end area (220) and the center area.

15. The process of manufacturing the case (120) of any one of claims 13 to 14, wherein the joining process forms a welding bead (250) on an inner surface (200b) of the case (120), and
the groove (240) receives at least a portion of the welding bead (250).

## Patentansprüche

1. Batteriezelle (100), umfassend:
ein Gehäuse (120) enthaltend eine erste Kante (207), die eine Öffnung (201) bildet, und einen Verbindungsabschnitt (230), der senkrecht zu der ersten Kante (207) positioniert ist;
eine Elektrodenanordnung (110), die in dem Gehäuse (120) untergebracht ist; und
eine Kappenanordnung (140, 150), die mit dem Gehäuse (120) gekoppelt ist und die Öffnung (201) abdichtet,
wobei das Gehäuse (120) einen mittleren Bereich (210), der der Elektrodenanordnung (110) zugewandt ist, einen Endbereich (220), der mindestens einen Abschnitt der Kappenanordnung (140, 150) umgibt, und eine Nut (240), die sich von dem Endbereich (220) erstreckt und eine Schweißraupe (250) aufnimmt, die in dem Verbindungsabschnitt (230) gebildet ist, enthält,
wobei der Endbereich (220) eine Montagefläche (220a) enthält, die die Kappenanordnung (140, 150) berührt, und
wobei die Nut (240) zu der Innenseite des Gehäuses (200) hin auf der Montagefläche (220a) gebildet ist.

2. Batteriezelle (100) nach Anspruch 1, wobei die Öffnung (201) eine erste Öffnung, die in einer Seite der Batteriezelle (100) gebildet ist, und eine zweite Öffnung, die in der anderen Seite der Batteriezelle (100) gebildet ist, enthält, und
die Kappenanordnung eine erste Kappenanordnung (140), die die erste Öffnung abdichtet, und eine zweite Kappenanordnung (150), die die zweite Öffnung abdichtet, enthält.

3. Batteriezelle (100) nach Anspruch 2, wobei der Endbereich (220) einen ersten Endbereich (221), der die erste Öffnung bildet, und einen zweiten Endbereich (222), der die zweite Öffnung bildet, enthält, und
der Verbindungsabschnitt (230) sich von dem ersten Endbereich (221) zu dem zweiten Endbereich (222) erstreckt, indem er den mittleren Bereich passiert.

4. Batteriezelle (100) nach Anspruch 3, wobei die Nut (240) eine erste Nut (241), die sich von dem ersten Endbereich (221) erstreckt und mindestens einem Abschnitt der ersten Kappenanordnung (140) zugewandt ist, und eine zweite Nut (242), die sich von dem zweiten Endbereich (222) erstreckt und mindestens einem Abschnitt der zweiten Kappenanordnung (150) zugewandt ist, enthält.

5. Batteriezelle (100) nach einem der Ansprüche 1 bis 4, wobei eine zweite Dicke (T2) des Endbereichs (220) dünner als eine erste Dicke (T1) des mittleren Bereichs (210) ist.

6. Batteriezelle (100) nach einem der Ansprüche 1 bis 5, wobei der Verbindungsabschnitt (230) in einer ersten Richtung gebildet ist, und
das Gehäuse (120) eine Vielzahl von Biegeabschnitten enthält, die basierend auf einer Richtung parallel zu der ersten Richtung gefaltet sind.

7. Batteriezelle (100) nach einem der Ansprüche 1 bis 6, wobei sich die Nut (240) zwischen dem Endbereich (220) und dem mittleren Bereich (210) befindet.

8. Batteriezelle (100) nach einem der Ansprüche 1 bis 7, wobei das Gehäuse (120) eine Außenfläche (200a), die einer Außenseite der Batteriezelle (100) zugewandt ist, und eine Innenfläche (200b), die der Außenfläche (200a) gegenüberliegt, enthält, und
sich die Schweißraupe (250) auf der Innenfläche (200b) des Gehäuses (120) befindet.

9. Batteriezelle (100) nach einem der Ansprüche 1 bis 8, wobei das Gehäuse (120) mindesten eines von Aluminium oder Edelstahl enthält.

10. Batteriezelle (100) nach einem der Ansprüche 1 bis 9, wobei der Endbereich (220) und die Nut (240) unter Verwendung von Schmieden gebildet sind.

11. Batteriezelle (100) nach einem der Ansprüche 1 bis 10, wobei das Gehäuse (120) eine Vielzahl von zweiten Kanten (208) senkrecht zu der ersten Kante (207) enthält, und
der Verbindungsabschnitt (230) durch Schweißen der Vielzahl von zweiten Kanten (208) gebildet ist.

12. Batterievorrichtung (400), umfassend:
eine Zellenanordnung (101), die eine Vielzahl von Batteriezellen (100) nach Anspruch 1 enthält; und
einen Rahmen (410), der die Zellenanordnung (101) enthält,
wobei die Vielzahl von Batteriezellen (100) jeweils enthält:
ein Gehäuse (120) enthaltend eine erste Kante (207), die eine Öffnung bildet, und einen Verbindungsabschnitt (230), der senkrecht zu der ersten Kante (207) positioniert ist,
eine Elektrodenanordnung (110), die in dem Gehäuse (120) untergebracht ist, und
eine Kappenanordnung (140, 150), die mit dem Gehäuse (120) gekoppelt ist und die Öffnung abdichtet, und
das Gehäuse (120) einen mittleren Bereich (210), der der Elektrodenanordnung (110) zugewandt ist, einen Endbereich (220), der mindestens einen Abschnitt der Kappenanordnung (140, 150) umgibt, und eine Nut (240), die sich von dem Endbereich (220) erstreckt und eine Schweißraupe (250) aufnimmt, die in dem Verbindungsabschnitt (230) gebildet ist, enthält.

13. Verfahren zum Herstellen eines Gehäuses (120) der Batteriezelle (100) nach Anspruch 1, umfassend:
einen Vorbereitungsprozess zum Vorbereiten einer Platte enthaltend eine Vielzahl von ersten Kanten (207) und eine Vielzahl von zweiten Kanten (208) senkrecht zu der Vielzahl von ersten Kanten (207);
einen Stanzprozess zum Bilden eines Durchgangslochs in der Platte;
einen Druckbeaufschlagungsprozess zum Bilden eines Endbereichs (220) in der Vielzahl von ersten Kanten (207) der Platte und einer Nut (240) in einem Abschnitt der Vielzahl von zweiten Kanten (208);
einen Biegeprozess zum Biegen zumindest eines Abschnitts der Platte; und
einen Verbindungsprozess zum Verbinden der Vielzahl von zweiten Kanten (208).

14. Verfahren zum Herstellen des Gehäuses (120) nach Anspruch 13, wobei die Platte einen mittleren Bereich (210) enthält, der von der Vielzahl von ersten Kanten (207) und der Vielzahl von zweiten Kanten (208) umgeben ist, und sich die Nut (240) zwischen dem Endbereich (220) und dem mittleren Bereich befindet.

15. Verfahren zum Herstellen des Gehäuses (120) nach einem der Ansprüche 13 bis 14, wobei der Verbindungsprozess eine Schweißraupe (250) auf einer Innenfläche (200b) des Gehäuses (120) bildet, und
die Nut (240) mindestens einen Abschnitt der Schweißraupe (250) aufnimmt.

## Revendications

1. Cellule de batterie (100) comprenant :
un boîtier (120) comportant un premier bord (207) formant une ouverture (201) et une partie de raccordement (230) positionnée perpendiculairement au premier bord (207) ;
un ensemble d'électrodes (110) logé dans le boîtier (120) ; et
un ensemble de capuchons (140, 150) couplé au boîtier (120) et assurant l'étanchéité de l'ouverture (201),
le boîtier (120) comportant une zone centrale (210) tournée vers l'ensemble d'électrodes (110), une zone d'extrémité (220) qui entoure au moins une partie de l'ensemble de capuchons (140, 150), et une rainure (240) s'étendant depuis la zone d'extrémité (220) et recevant un cordon de soudure (250) formé dans la partie de jonction (230),
la zone d'extrémité (220) comportant une surface de montage (220a) qui est en contact avec l'ensemble de capuchons (140, 150), et
la rainure (240) étant formée sur la surface de montage (220a) en direction de l'intérieur du boîtier (200).

2. Cellule de batterie (100) selon la revendication 1, dans laquelle l'ouverture (201) comprend une première ouverture formée dans un côté de la cellule de batterie (100) et une deuxième ouverture formée dans l'autre côté de la cellule de batterie (100), et
l'ensemble de capuchons comprend un premier ensemble de capuchons (140) qui assure l'étanchéité de la première ouverture et un deuxième ensemble de capuchons (150) qui assure l'étanchéité de la deuxième ouverture.

3. Cellule de batterie (100) selon la revendication 2, dans laquelle la zone d'extrémité (220) comprend une première zone d'extrémité (221) formant la première ouverture et une deuxième zone d'extrémité (222) formant la deuxième ouverture, et
la section de liaison (230) s'étend de la première partie d'extrémité (221) à la deuxième partie d'extrémité (222) en traversant par la partie centrale.

4. Cellule de batterie (100) selon la revendication 3, dans laquelle la rainure (240) comprend une première rainure (241) s'étendant depuis la première zone d'extrémité (221) et tournée vers au moins une partie du premier ensemble de capuchons (140), et une deuxième rainure (242) s'étendant depuis la deuxième zone d'extrémité (222) et tournée vers au moins une partie du deuxième ensemble de capuchons (150).

5. Cellule de batterie (100) selon l'une des revendications 1 à 4, dans laquelle une deuxième épaisseur (T2) de la zone d'extrémité (220) est inférieure à une première épaisseur (T1) de la zone centrale (210).

6. Cellule de batterie (100) selon l'une des revendications 1 à 5, dans laquelle la partie de raccordement (230) est formée dans une première direction, et
le boîtier (120) comprend une pluralité de parties pliées qui sont pliées selon une direction parallèle à la première direction.

7. Cellule de batterie (100) selon l'une des revendications 1 à 6, dans laquelle la rainure (240) est située entre la partie d'extrémité (220) et la partie centrale (210).

8. Cellule de batterie (100) selon l'une des revendications 1 à 7, dans laquelle le boîtier (120) comprend une surface extérieure (200a) tournée vers un côté extérieur de la cellule de batterie (100) et une surface intérieure (200b) opposée à la surface extérieure (200a), et
le cordon de soudure (250) est situé sur la surface intérieure (200b) du boîtier (120).

9. Cellule de batterie (100) selon l'une des revendications 1 à 8, dans laquelle le boîtier (120) comprend au moins l'un parmi l'aluminium et l'acier inoxydable.

10. Cellule de batterie (100) selon l'une des revendications 1 à 9, dans laquelle la zone d'extrémité (220) et la rainure (240) sont formées par forgeage.

11. Cellule de batterie (100) selon l'une des revendications 1 à 10, dans laquelle le boîtier (120) comporte une pluralité de deuxièmes arêtes (208) perpendiculaires à la première arête (207), et
la partie de jonction (230) est formée par soudage de la pluralité de deuxièmes arêtes (208).

12. Dispositif de batterie (400) comprenant :
un ensemble de cellules (101) comprenant une pluralité de cellules de batterie (100) selon la revendication 1 ; et
un châssis (410) contenant l'ensemble de cellules (101),
dans lequel chacune des multiples cellules de batterie (100) comprend :
un boîtier (120) comportant un premier bord (207) formant une ouverture et une partie de connexion (230) positionnée perpendiculairement au premier bord (207),
un ensemble d'électrodes (110) logé dans le boîtier (120), et
un ensemble de capuchons (140, 150) couplé au boîtier (120) et assurant l'étanchéité de l'ouverture, et
le boîtier (120) comportant une zone centrale (210) tournée vers l'ensemble d'électrodes (110), une zone d'extrémité (220) qui entoure au moins une partie de l'ensemble de capuchons (140, 150), et une rainure (240) s'étendant depuis la zone d'extrémité (220) et recevant un cordon de soudure (250) formé dans la partie de jonction (230).

13. Procédé de fabrication d'un boîtier (120) de la cellule de batterie (100) selon la revendication 1, comprenant :
un processus de préparation consistant à préparer une plaque comportant une pluralité de premiers bords (207) et une pluralité de seconds bords (208) perpendiculaires à la pluralité de premiers bords (207) ;
un processus de découpage destiné à former un trou traversant dans la plaque ;
un processus de mise sous pression destiné à former une zone d'extrémité (220) dans la pluralité de premiers bords (207) de la plaque et une rainure (240) dans une partie de la pluralité de seconds bords (208) ;
un processus de pliage destiné à plier au moins une partie de la plaque ; et
un processus d'assemblage destiné à assembler la pluralité de deuxièmes arêtes (208).

14. Procédé de fabrication du boîtier (120) selon la revendication 13, dans lequel la plaque comprend une zone centrale (210) entourée par la pluralité de premiers bords (207) et la pluralité de seconds bords (208), et la rainure (240) est située entre la zone d'extrémité (220) et la zone centrale.

15. Procédé de fabrication du boîtier (120) selon l'une des revendications 13 à 14, dans lequel le processus d'assemblage forme un cordon de soudure (250) sur une surface intérieure (200b) du boîtier (120), et
la rainure (240) reçoit au moins une partie du cordon de soudure (250).
